# EUROPÄISCHE PATENTSCHRIFT

(11) **EP 4 294 683 B1**
(45) Veröffentlichungstag und Bekanntmachung des Hinweises auf die Patenterteilung: **27.08.2025**
(21) Anmeldenummer: 22702853.7
(22) Anmeldetag: 01.02.2022
(51) Int. Cl.: B60S 3/00, B60S 3/04, F26B 21/00

(54) **VORRICHTUNG ZUM KONTAKTLOSEN ENTFERNEN VON AUF FAHRZEUGAUSSENOBERFLÄCHEN VERBLIEBENEN WASSERTROPFEN NACH EINER FAHRZEUGWÄSCHE**
DEVICE FOR THE CONTACTLESS REMOVAL OF DROPS OF WATER REMAINING ON VEHICLE EXTERIOR SURFACES AFTER A VEHICLE WASH
DISPOSITIF POUR L'ÉLIMINATION SANS CONTACT DE GOUTTES D'EAU RESTANT SUR DES SURFACES EXTÉRIEURES DE VÉHICULE APRÈS UN LAVAGE DE VÉHICULE

(30) Priorität: 18.02.2021 AT 501092021
(43) Veröffentlichungstag der Anmeldung: 27.12.2023
(73) Patentinhaber: Grosshammer, Walter, 8740 Zeltweg (AT)
(72) Erfinder: Grosshammer, Walter, 8740 Zeltweg (AT)
(74) Vertreter: Wirnsberger & Lerchbaum Patentanwälte OG
(86) Internationale Anmeldenummer: PCT/AT2022/060030
(87) Internationale Veröffentlichungsnummer: WO 2022/174274

(56) Entgegenhaltungen:
- DE-A1- 10 333 976
- DE-U1- 202016 008 698
- US-A1- 2008 308 651

## Beschreibung

Die Erfindung betrifft eine Vorrichtung, insbesondere Druckluftrichtungsblasvorrichtung, zum kontaktlosen Entfernen von auf Fahrzeugaußenoberflächen verbliebenen Wassertropfen nach einer Fahrzeugwäsche, wobei die Vorrichtung länglich ausgebildet und über eine flexible Leitung an eine Druckluftquelle anschließbar ist und mindestens eine erste Austrittsöffnung für Druckluft aufweist, die an der Vorrichtung längsseitig angeordnet ist.

Eine konventionelle Art zum Trocknen von Fahrzeugaußenoberflächen nach einer Fahrzeugwäsche besteht im sogenannten händischen Abledern. Dabei wird ein spezielles Tuch verwendet, das von Zeit zu Zeit in einem herkömmlichen Gefäß (Eimer) zwischendurch mit klarem Wasser gereinigt und ausgewrungen wird, damit das Tuch wieder trocken und saugfähig wird um keine Schlieren am Lack eines Fahrzeuges zu hinterlassen. Dies ist speziell bei niedrigen Außentemperaturen zumindest unangenehm und zeitaufwändig.

Als Verbesserung wurde u.a. in der DE 20 2016 008 698 U1, DE 10 2016 121 482 A1, AT 16 201 U1 und AT 16 202 U1 ein Handblasgerät beschrieben, das eine schmale Düse aufweist, wodurch ein vollständiges Trocknen nur mit vielen Bewegungen aufwändig erfolgen kann.

Vorrichtungen mit längsseitig angeordneten Ausblasöffnungen sind auch aus der US 6,021,584 oder US 2008/0216338 A1 bekannt, wobei hier kurze Düsen entlang der Fahrzeugaußenoberfläche entlanggeführt werden.

Eine weitere Vorrichtung ist in der DE 103 33 976 A1 beschrieben, die eine lanzenförmige Vorrichtung mit längsseitig angeordneten Austrittsöffnungen zeigt. US-A-2008/308651 offenbart den Oberbegriff des Anspruchs 1.

Allen bekannten Vorrichtungen ist gemeinsam, dass damit zwar die Fahrzeugaußenoberflächen gut getrocknet werden können, schwer zugängliche Stellen aber feucht bleiben und daher leicht einen Rost hervorrufen können.

Die vorliegende Erfindung soll die Nachteile des Standes der Technik vermeiden und eine Vorrichtung angeben, die eine möglichst vollständige Trocknung von Fahrzeugen bei gleichzeitig einfacher Handhabung ermöglicht und zeitintensives Abledern von Lackoberflächen von Fahrzeugen vermeidet.

Diese Aufgabe wird erfindungsgemäß durch eine Vorrichtung mit den Merkmalen des Anspruchs 1 gelöst.

Mit einer weiteren Austrittsöffnung, die an einer Längsachse der Vorrichtung angeordnet ist, können nunmehr auch Stellen erreicht werden, die sonst nur sehr schwierig erreichbar sind. Dies sind einerseits die Mitte des Fahrzeugdaches, der Motorhaube oder von Fensterscheiben bei größeren Fahrzeugen, aber auch Radkästen, Spalte zur Fahrzeugtür, Motorhaube, Einbauscheinwerfer, Lüftungsschlitze, Nummerntafelhalter, Außenspiegel und viele andere schwer zugängliche Positionen.

Erfindungsgemäß ist es vorgesehen, dass ein erstes Ventil vorgesehen ist, das auf einer Seite mit der Druckluftquelle und auf einer anderen Seite mit der mindestens einen ersten Austrittsöffnung und mit der weiteren Austrittsöffnung in Fluidverbindung steht, wobei die mindestens eine erste Austrittsöffnung mit einem ersten Druckluftrohr in Verbindung stehen und die mindestens eine weitere Austrittsöffnung mit einem weiteren Druckluftrohr verbunden sein kann und beide Druckluftrohre mit dem ersten Ventil verbindbar sein können. Durch eine derartige Anordnung kann ein Luftstrom gezielt in eine Richtung gelenkt werden.

Weiters hat sich vorteilhaft erwiesen, wenn das erste Ventil einen ersten Hebel aufweist, der zum Umschalten einer Druckluftzufuhr zwischen der mindestens einen ersten Austrittsöffnung und der weiteren Austrittsöffnung ausgebildet ist. Damit kann in einfacher Weise ein Luftstrom zur gewünschten Austrittsöffnung geleitet werden.

Die mindestens eine erste Austrittsöffnung kann dabei als Reihenanordnung von Austrittsöffnungen aber auch als Ausblasschlitz ausgebildet sein. Damit kann die Vorrichtung bequem parallel über die Fahrzeugaußenoberfläche geführt werden, wobei große Flächen durch einen Luftstrom erfasst werden können.

Bevorzugt ist vorgesehen, dass der Ausblasschlitz eine Breite von 0,03 mm bis 0,5 mm, vorzugsweise von bis zu 0,05 mm, aufweist. Mit einem derart schmalen Ausblasschlitz lässt sich eine Art Luftmesser erreichen, mit dem verbliebene Wassertropfen von der Fahrzeugaußenoberfläche regelrecht abgeschnitten werden können.

Weiters hat sich günstig erwiesen, dass der Ausblasschlitz und/oder die Reihenanordnung von Austrittsöffnungen eine Länge von 200 mm bis 500 mm, vorzugsweise von 360 mm, aufweist. Damit kann ein Luftstrom gezielt an den verschiedenen Stellen der Fahrzeugaußenoberfläche eingesetzt werden.

Günstig ist es, wenn ein weiteres Ventil zu einer Unterbrechung und/oder Regelung eines Druckluftstroms von der Druckluftquelle vorgesehen ist, wobei das weitere Ventil in einem Handgriff integriert sein kann. Somit kann ein Luftstrom vor und nach einer Trocknung einer Fahrzeugaußenoberfläche abgeschaltet und auch die Intensität des Luftstroms reguliert werden.

Weiters hat sich günstig erwiesen, dass die Druckluftquelle als Schraubenkompressor ausgebildet ist. Mit einem Schraubenkompressor können besonders günstig die hohen Drücke erzeugt werden.

Besonders vorteilhaft hat sich erwiesen, wenn der Schraubenkompressor über eine flexible Leitung mit der Vorrichtung verbunden ist, wobei die flexible Leitung einen Durchmesser von ¼ Zoll bis 1 Zoll (6.65 mm bis 25.4 mm) aufweist. Bei bisherigen Vorrichtungen im Stand der Technik werden hier Leitungen mit Durchmessern von 8 cm bis 15 cm eingesetzt, wodurch diese Leitungen ein großes Gewicht aufweisen und schwer handzuhaben sind. Mit der erfindungsgemäßen Lösung kann die flexible Leitung auch einfach um größere Fahrzeuge herumgelegt werden, ohne zusätzliches störendes Gewicht zu haben.

Bevorzugt ist vorgesehen, dass der Schraubenkompressor ausgebildet ist einen Druckluftstrom von 0,5 m³/min bis 1,5 m³/min, vorzugsweise von 0,9 m³/min bis 1,2 m³/min bei einem Druck von 6 bar bis 8 bar zu erzeugen. Damit kann günstig ein ausgeblasener Luftstrom mit hoher Geschwindigkeit erzeugt werden.

Günstig hat sich erwiesen, wenn der Schraubenkompressor mit einer Softstartfunktion ausgestattet ist.

Es hat sich gezeigt, dass es günstig ist, eine entsprechende Größenauswahl des Schraubenkompressors zu treffen, wobei der Schraubenkompressor mit mehreren Vorrichtungen, vorzugsweise Druckluftrichtungsblasvorrichtungen, verbindbar ist. Damit können auch mehrere Vorrichtungen gleichzeitig, beispielsweise in nebeneinanderliegenden Boxen zum händischen Trocknen von Fahrzeugen, benützt werden.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine Ausführung einer erfindungsgemäßen Vorrichtung;
Fig. 2 eine andere Ansicht der erfindungsgemäßen Vorrichtung;
Fig. 3 einen Ausschnitt der erfindungsgemäßen Vorrichtung;
Fig. 4 die längsseitig angeordnete Austrittsöffnung;
Fig. 5 einen Ausschnitt der erfindungsgemäßen Vorrichtung mit einer Umschalteinrichtung zum Umschalten eines Luftstroms;
Fig. 6 die Anordnung der weiteren Austrittsöffnung;
Fig. 7 eine Ansicht einer Anlage mit der erfindungsgemäßen Vorrichtung und
Fig. 8 eine andere Ansicht einer Anlage mit der erfindungsgemäßen Vorrichtung.

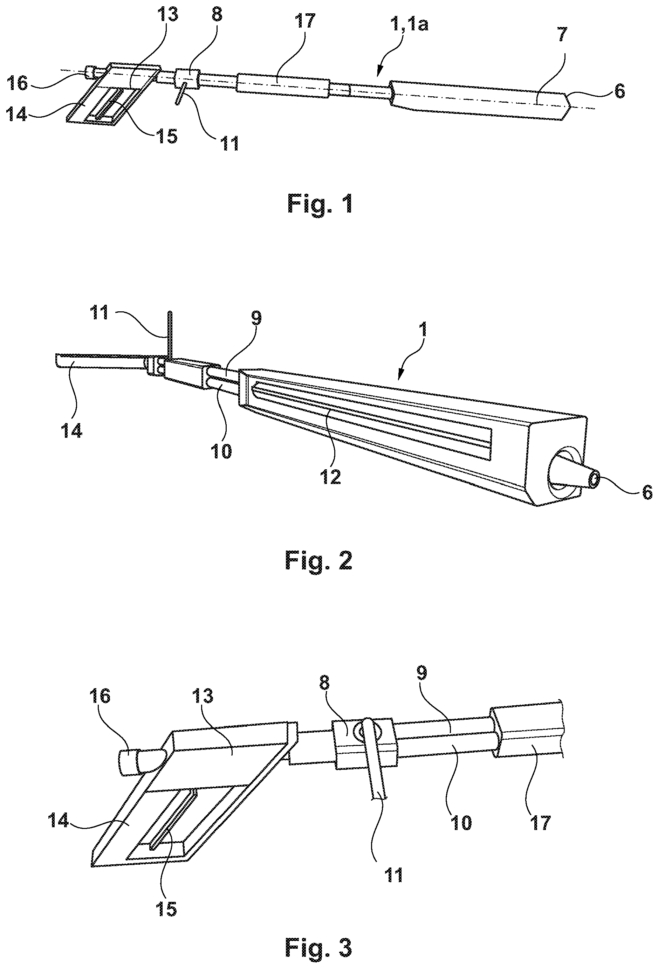

Fig. 1 zeigt eine Ansicht einer erfindungsgemäßen Vorrichtung 1, insbesondere Druckluftrichtungsblasvorrichtung 1a. Diese ist länglich in Lanzenform ausgebildet und weist an einem Ende einen Anschluss 16 für eine flexible Leitung 3 zur Zufuhr für Druckluft von einer Druckluftquelle 4, beispielsweise einem Schraubenkompressor 4a, auf. Dieser Anschluss 16 ist an einem Handgriff 14 angeordnet, wobei der Handgriff 14 ein weiteres Ventil 13 aufweist, mit dem der Luftstrom geregelt und/oder unterbrochen werden kann. Auch ist am Handgriff 14 ein Anschluss 16 für die flexible Leitung 3 vorgesehen. Weiters ist ein Stützgriff 17 vorgesehen, damit die Vorrichtung 1 gut gehalten und manuell geführt werden kann. Zwischen dem Handgriff 14 und dem Stützgriff 17 ist ein erstes Ventil 8 mit erstem Hebel 11 vorgesehen, das noch in weiterer Folge genauer beschrieben wird. Am Ende der Vorrichtung 1 ist dann die längsseitig angeordnete erste Austrittsöffnung 5 vorgesehen. Am Ende ist weiters in Richtung der Längsachse 7 der Vorrichtung 1 eine weitere Austrittsöffnung 6 vorgesehen, die vorzugsweise kreisförmig ausgebildet ist und dazu dient, einen Luftstrom zu Spalten zwischen Fahrzeughauptteilen und in sonst schwer zugängliche Teile wie Radkästen 24, Lüftungsschlitze 23 und andere Fahrzeugteile zu richten und diese Teile auszublasen, um einem späteren Nachtropfen aus diesen Vertiefungen bzw. Spalten durch dort angesammeltes Wasser weitgehend vorzubeugen und auch die Gefahr des Rostens zu minimieren.

In Fig. 2 ist eine Ansicht auf die Stirnseite der Vorrichtung 1 dargestellt. Hier ist besonders gut die erste Austrittsöffnung 5, hier als Ausblasschlitz 12 dargestellt, zu erkennen. Es können natürlich auch mehrere Austrittsöffnungen in Reihenanordnung vorgesehen sein.

Auch ist die weitere Austrittsöffnung 6, die hier als kreisförmige Düse dargestellt ist, an der Stirnseite gut zu erkennen. Auch kann man den Handgriff 14, den ersten Hebel 11 sowie ein erstes Druckluftrohr 9 und ein weiteres Druckluftrohr 10 erkennen.

Fig. 3 zeigt die Situation an einem Ende der Vorrichtung 1 gut. Der Luftstrom, der von der Druckluftquelle 4 über eine flexible Leitung 3 zugeführt wird, tritt durch einen Anschluss 16, der an einem Handgriff 14 angeordnet ist, in die Vorrichtung 1 ein. Im Handgriff 14 ist ein weiteres Ventil 13 integriert, das über einen weiteren Hebel 15 gesteuert werden kann. So kann die Luftmenge geregelt, aber auch gänzlich unterbrochen werden, was besonders vor und nach der Verwendung erforderlich ist. Daran anschließend ist eine Umschalteinrichtung, hier als erstes Ventil 8 dargestellt, vorgesehen, das als 3/2-Wegeventil ausgebildet ist. Dieses erste Ventil 8 ist mit einem ersten Druckluftrohr 9 verbunden, das in weiterer Folge mit der ersten Austrittsöffnung 5 in Verbindung steht. Weiters ist das erste Ventil 8 mit einem weiteren Druckluftrohr 10 verbunden, das mit der weiteren Austrittsöffnung 6 in Verbindung steht. Dieses erste Ventil 8 weist einen ersten Hebel 11 auf, mit dem der Luftstrom zwischen dem ersten Druckluftrohr 9 und dem weiteren Druckluftrohr 10 umgeschaltet werden kann. Zur besseren Handhabung der Vorrichtung 1 ist auch ein Stützgriff 17 vorgesehen.

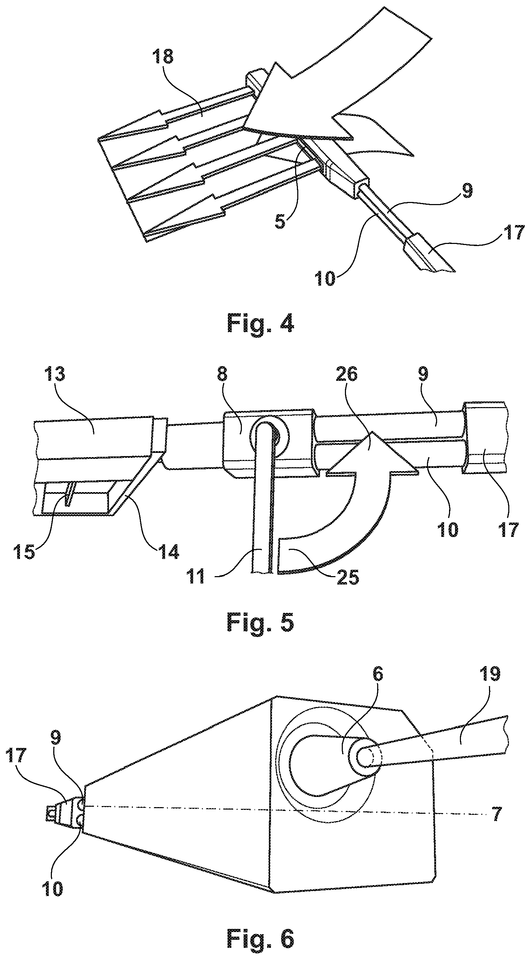

In Fig. 4 ist die erste Austrittsöffnung 5 dargestellt, die längsseitig an der Vorrichtung 1 angeordnet ist. Es kann dabei ein Ausblasschlitz 12 vorgesehen sein oder eine Reihenanordnung von einzelnen Austrittsöffnungen. Die Breite des ausgeblasenen ersten Luftstroms 18 sollte zwischen 200 mm und 500 mm, vorzugsweise bei etwa 360 mm liegen. Dadurch kann der Luftstrom gut an die Gegebenheiten der Fahrzeugaußenoberfläche 2 angepasst werden. In dieser Figur ist auch erkennbar, dass durch den ausgeblasenen Luftstrom eine Saugwirkung entsteht, die weitere Luft bringt und zur Trocknung der Fahrzeugaußenoberfläche 2 beiträgt. Durch die seitlich aus der Vorrichtung 1 austretende Druckluft kann die Vorrichtung 1 bequem parallel über der zu trocknenden Fahrzeugaußenoberfläche 2 angeordnet und es können große Flächen durch den Trocknungsstrom erfasst werden. Durch den Stützgriff 17 kann die Vorrichtung 1 bei guter Stabilität auch weit über die Fahrzeugaußenoberfläche 2, insbesondere auch über die Fahrzeugmitte hinaus, geführt werden. Zwischen Stützgriff 17 und erster Austrittsöffnung 5 sind ein erstes Druckluftrohr 9 und ein weiteres Druckluftrohr 10 zu sehen.

Fig. 5 zeigt die Situation um eine Umschalteinrichtung, die hier als erstes Ventil 8 ausgebildet ist, im Detail. Auf der linken Seite ist der Handgriff 14 mit dem integrierten weiteren Ventil 13 sowie der weitere Hebel 15 zur Regulierung des Druckluftstroms zu erkennen. Das erste Ventil 8 ist bevorzugt ein 3/2-Wegeventil, bei dem der Luftstrom links eintritt und entsprechend der Stellung des ersten Ventils 8 durch das erste Druckluftrohr 9 oder das weitere Druckluftrohr 10 weitergeleitet wird. Die Umschaltung erfolgt durch den ersten Hebel 11 von einer ersten Position 25 in eine zweite Position 26. Zur besseren Handhabung der Vorrichtung 1 ist auch ein Stützgriff 17 vorgesehen.

Die Fig. 6 stellt den Teil der Vorrichtung 1 mit der ersten Austrittsöffnung 5 und der weiteren Austrittsöffnung 6 dar, wobei sich die weitere Austrittsöffnung 6 in der Längsachse 7 der Vorrichtung 1 an der Stirnseite befindet und beispielsweise als Düse mit kreisrundem Querschnitt ausgebildet ist. Der Durchmesser der Düse kann dabei zwischen 10 mm und 15 mm betragen. Mit der weiteren Austrittsöffnung 6 wird der weitere Luftstrom 19 in Richtung der Längsachse 7 der Vorrichtung 1 ausgeblasen und kann zur Abblasung von Flüssigkeit an schwer zugänglichen Stellen sowie Spalten zwischen den Fahrzeugteilen oder den Lüftungsschlitzen 23 eingesetzt werden.

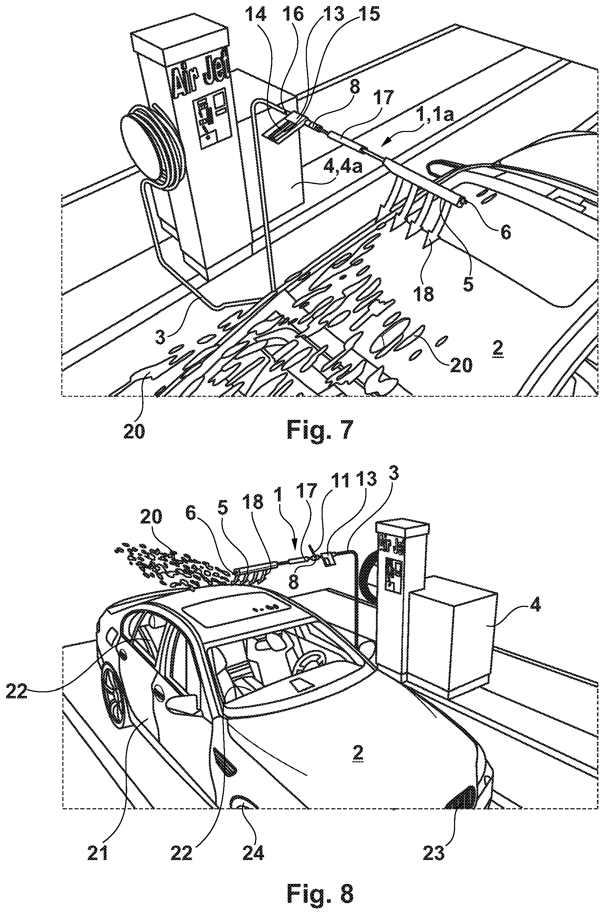

In den Fig. 7 und 8 ist eine gesamte Anlage zur Trocknung von Fahrzeugaußenoberflächen 2 nach einer Fahrzeugwäsche dargestellt. Speziell erkennbar ist hier die Druckluftquelle 4, die vorzugsweise als Schraubenkompressor 4a ausgebildet ist. Diese Druckluftquelle 4 ist dazu ausgebildet, eine Luftmenge von 0,5 m³/min bis 1,5 m³/min, vorzugsweise von 0,9 m³/min bis 1,2 m³/min bei einem Druck von 6 bar bis 8 bar zu erzeugen. Die Stromaufnahme erfolgt vorzugsweise bei 400 V und die Leistungsaufnahme beträgt vorteilhaft zwischen 5 kW und 10 kW. Im Stand der Technik werden Drücke von etwa 600 mbar verwendet, wodurch ein sehr großer Querschnitt des zuführenden Schlauches mit Durchmessern von oft zwischen 8 cm und 15 cm benötigt wird. Mit dieser Druckluftquelle 4 ist eine flexible Leitung 3, vorzugsweise ein Druckluftschlauch, mit einem Durchmesser von ¼ Zoll bis 1 Zoll (6.65 mm bis 25.4 mm) verbunden. Durch den geringen Durchmesser im Gegensatz zu den Durchmessern im Stand der Technik, ist diese flexible Leitung 3 leicht, so dass keine störenden Kräfte auf die Vorrichtung 1 wirken. Auch kann die flexible Leitung 3 gut um größere Fahrzeuge herum gelegt werden. Am anderen Ende der flexiblen Leitung 3 ist diese über den Anschluss 16 mit der Vorrichtung 1 verbunden. Es sind hier die einzelnen Teile wie Handgriff 14, erstes Ventil 8, Stützgriff 17 sowie erste Austrittsöffnungen 5 und weitere Austrittsöffnung 6 gut erkennbar. Bei der dargestellten Variante werden durch den aus der längsseitig angeordneten ersten Ausblasöffnung 5 austretenden ersten Luftstrom 18 die noch an der Fahrzeugaußenoberfläche 2 anhaftenden Flüssigkeitsteilchen 20 abgeblasen. Mit der weiteren Austrittsöffnung 6 können dann Spalte z.B. an den Fahrzeugtüren 21, bei den Fenstern 22 oder Lüftungsschlitzen 23 sowie auch die Radkästen 24 entsprechend von Flüssigkeitsteilchen 20 befreit werden. Die dargestellte Anlage kann in einer Box zum händischen Waschen eines Fahrzeuges aber auch nach einer automatischen Waschstraße aufgestellt werden.

Mit der oben beschriebenen Vorrichtung 1 können neben der Entfernung von Wassertropfen auf der glatten Fahrzeugaußenoberfläche 2 auch Wassertropfen an schwer zugänglichen Stellen besonders gut und einfach entfernt werden.

## Patentansprüche

1. Vorrichtung (1), insbesondere Druckluftrichtungsblasvorrichtung (1a), zum kontaktlosen Entfernen von auf Fahrzeugaußenoberflächen (2) verbliebenen Wassertropfen nach einer Fahrzeugwäsche, wobei die Vorrichtung (1) länglich ausgebildet und über eine flexible Leitung (3) an eine Druckluftquelle (4) anschließbar ist und mindestens eine erste Austrittsöffnung (5) für Druckluft aufweist, die an der Vorrichtung (1) längsseitig angeordnet ist, wobei mindestens eine weitere Austrittsöffnung (6) vorgesehen ist, die an einer Längsachse (7) der Vorrichtung (1) angeordnet ist, wobei ein erstes Ventil (8) vorgesehen ist, das auf einer Seite mit der Druckluftquelle (4) und auf einer anderen Seite mit der mindestens einen ersten Austrittsöffnung (5) und mit der weiteren Austrittsöffnung (6) in Fluidverbindung steht **dadurch gekennzeichnet, dass** die mindestens eine erste Austrittsöffnung (5) mit einem ersten Druckluftrohr (9) in Verbindung steht und die mindestens eine weitere Austrittsöffnung (6) mit einem weiteren Druckluftrohr (10) verbunden ist und beide Druckluftrohre (9, 10) mit dem ersten Ventil (8) verbindbar sind.

2. Vorrichtung (1) nach Anspruch 1, **dadurch gekennzeichnet, dass** das erste Ventil (8) eine Umschalteinrichtung, insbesondere einen ersten Hebel (11), aufweist, der zum Umschalten einer Druckluftzufuhr zwischen der mindestens einen ersten Austrittsöffnung (5) und der weiteren Austrittsöffnung (6) ausgebildet ist.

3. Vorrichtung (1) nach Anspruch 1 oder 2, **dadurch gekennzeichnet, dass** die mindestens eine erste Austrittsöffnung (5) als Reihenanordnung von Austrittsöffnungen ausgebildet ist.

4. Vorrichtung (1) nach Anspruch 1 oder 2, **dadurch gekennzeichnet, dass** die mindestens eine erste Austrittsöffnung (5) als Ausblasschlitz (12) ausgebildet ist.

5. Vorrichtung (1) nach Anspruch 4, **dadurch gekennzeichnet, dass** der Ausblasschlitz (12) eine Breite von 0,03 mm bis 0,5 mm, vorzugsweise von bis zu 0,05 mm, aufweist.

6. Vorrichtung (1) nach einem der Ansprüche 3 bis 5, **dadurch gekennzeichnet, dass** der Ausblasschlitz (12) und/oder die Reihenanordnung von Austrittsöffnungen eine Länge von 200 mm bis 500 mm, vorzugsweise von 360 mm, aufweist.

7. Vorrichtung (1) nach einem der Ansprüche 1 bis 6, **dadurch gekennzeichnet, dass** ein weiteres Ventil (13) zu einer Unterbrechung und/oder Regelung eines Druckluftstromes von der Druckluftquelle (4) vorgesehen ist.

8. Vorrichtung (1) nach Anspruch 7, **dadurch gekennzeichnet, dass** das weitere Ventil (13) in einem Handgriff (14) integriert ist.

9. Vorrichtung (1) nach einem der Ansprüche 1 bis 8, **dadurch gekennzeichnet, dass** die Druckluftquelle (4) als Schraubenkompressor (4a) ausgebildet ist.

10. Vorrichtung (1) nach Anspruch 9, **dadurch gekennzeichnet, dass** der Schraubenkompressor (4a) über eine flexible Leitung (3) mit der Vorrichtung (1) verbunden ist, wobei die flexible Leitung (3) einen Durchmesser von ¼ Zoll bis 1 Zoll (6.65 mm bis 25.4 mm) aufweist.

11. Vorrichtung (1) nach Anspruch 9 oder 10, **dadurch gekennzeichnet, dass** der Schraubenkompressor (4a) ausgebildet ist, einen Druckluftstrom von 0,5 m³/min bis 1,5 m³/min, vorzugsweise von 0,9 m³/min bis 1,2 m³/min, bei einem Druck von 6 bar bis 8 bar zu erzeugen.

12. Vorrichtung (1) nach einem der Ansprüche 9 bis 11, **dadurch gekennzeichnet, dass** der Schraubenkompressor (4a) mit einer Softstartfunktion ausgestattet ist.

13. Vorrichtung (1) nach einem der Ansprüche 9 bis 12, **dadurch gekennzeichnet, dass** der Schraubenkompressor (4a) mit mehreren Vorrichtungen (1), vorzugsweise Druckluftrichtungsblasvorrichtungen (1a), verbindbar ist.

## Claims

1. A device (1), in particular a compressed air directional blowing device (1a) for removing water droplets remaining on outer vehicle surfaces (2) without contact after a car wash, wherein the device (1) is oblong in design, and can be hooked up to a compressed air source (4) via a flexible line (3), and has at least one first outlet opening (5) for compressed air, which is arranged lengthwise on the device (1), wherein at least one additional outlet opening (6) is provided, which is arranged on a longitudinal axis (7) of the device (1), wherein a first valve (8) is provided, which is fluidically connected on one side with the compressed air source (4) and on another side with the at least one first outlet opening (5) and with the additional outlet opening (6), **characterized in that** the at least one first outlet opening (5) is connected with a first compressed air pipe (9), and the at least one additional outlet opening (6) is connected with an additional compressed air pipe (10), and both compressed air pipes (9, 10) can be connected with the first valve (8).

2. The device (1) according to claim 1, **characterized in that** the first valve (8) has a changeover device, in particular a first lever (11), for switching a compressed air supply between the at least one first outlet opening (5) and the additional outlet opening (6).

3. The device (1) according to claim 1 or 2, **characterized in that** the at least one first outlet opening (5) is designed as a serial arrangement of outlet openings.

4. The device (1) according to claim 1 or 2, **characterized in that** the at least one first outlet opening (5) is designed as a blow-out slot (12).

5. The device (1) according to claim 4, **characterized in that** the blow-out slot (12) has a width of 0.03 mm to 0.5 mm, preferably of up to 0.05 mm.

6. The device (1) according to one of claims 3 to 5, **characterized in that** the blow-out slot (12) and/or the serial arrangement of outlet openings has a length of 200 mm to 500 mm, preferably of 360 mm.

7. The device (1) according to one of claims 1 to 6, **characterized in that** an additional valve (13) is provided for interrupting and/or regulating a compressed air stream from the compressed air source (4).

8. The device (1) according to claim 7, **characterized in that** the additional valve (13) is integrated into a handle (14).

9. The device (1) according to one of claims 1 to 8, **characterized in that** the compressed air source (4) is designed as a screw compressor (4a).

10. The device (1) according to claim 9, **characterized in that** the screw compressor (4a) is connected with the device (1) via a flexible line (3), wherein the flexible line (3) has a diameter of ¼ of an inch to 1 inch (6.65 mm to 25.4 mm).

11. The device (1) according to claim 9 or 10, **characterized in that** the screw compressor (4a) is designed to generate a compressed air stream of 0.5 m³/min to 1.5 m³/in, preferably of 0.9 m³/min to 1.2 m³/min, at a pressure of 6 bar to 8 bar.

12. The device (1) according to one of claims 9 to 11, **characterized in that** the screw compressor (4a) is equipped with a soft start function.

13. The device (1) according to one of claims 9 to 12, **characterized in that** the screw compressor (4a) can be connected with several devices (1), preferably compressed air directional blowing devices (1a).

## Revendications

1. Dispositif (1), notamment dispositif de soufflage directionnel à air comprimé (1a), destiné à retirer sans contact des gouttes d'eau résiduelles sur des surfaces extérieures (2) de véhicules après un lavage du véhicule, le dispositif (1) étant conçu de forme allongée et susceptible d'être raccordé sur une source d'air comprimé (4) par l'intermédiaire d'une conduite flexible (3) et comportant au moins un premier orifice de sortie (5) pour de l'air comprimé, qui est placé sur le côté longitudinal du dispositif (1), au moins un orifice de sortie (6) supplémentaire étant prévu, qui est placé sur un axe longitudinal (7) du dispositif (1), une première soupape (8) étant prévue, qui sur un côté est en liaison fluidique avec la source d'air comprimé (4) et sur un autre côté, est en liaison fluidique avec l'au moins un premier orifice de sortie (5) et qui est en liaison fluidique avec l'orifice de sortie (6) supplémentaire, **caractérisé en ce que** l'au moins un premier orifice de sortie (5) est en liaison avec au moins un premier tuyau à air comprimé (9) et **en ce que** l'au moins un orifice de sortie (6) supplémentaire est relié avec un tuyau à air comprimé (10) supplémentaire et **en ce que** les deux tuyaux à air comprimé (9, 10) sont susceptibles d'être reliés avec la première soupape (8).

2. Dispositif (1) selon la revendication 1, **caractérisé en ce que** la première soupape (8) comporte un système d'inversion, notamment un premier levier (11), qui est conçu pour inverser une alimentation d'air comprimé entre l'au moins un premier orifice de sortie (5) et l'orifice de sortie (6) supplémentaire.

3. Dispositif (1) selon la revendication 1 ou 2, **caractérisé en ce que** l'au moins un premier orifice de sortie (5) est conçu sous la forme d'un agencement en série d'orifices de sortie.

4. Dispositif (1) selon la revendication 1 ou 2, **caractérisé en ce que** l'au moins un premier orifice de sortie (5) est conçu sous la forme d'une fente de soufflage (12).

5. Dispositif (1) selon la revendication 4, **caractérisé en ce que** la fente de soufflage (12) présente une largeur de 0,03 mm à 0,5 mm, de préférence de jusqu'à 0,05 mm.

6. Dispositif (1) selon l'une quelconque des revendications 3 à 5, **caractérisé en ce que** la fente de soufflage (12) et / ou l'agencement en série d'orifices de sortie présente une longueur de 200 mm à 500 mm, de préférence de 360 mm.

7. Dispositif (1) selon l'une quelconque des revendications 1 à 6, **caractérisé en ce qu'**il est prévu une soupape (13) supplémentaire, destinée à interrompre et / ou à réguler un flux d'air comprimé de la source d'air comprimé (4).

8. Dispositif (1) selon la revendication 7, **caractérisé en ce que** la soupape (13) supplémentaire est intégrée dans une poignée (14).

9. Dispositif (1) selon l'une quelconque des revendications 1 à 8, **caractérisé en ce que** la source d'air comprimé (4) est conçue sous la forme d'un compresseur à vis (4a).

10. Dispositif (1) selon la revendication 9, **caractérisé en ce que** le compresseur à vis (4a) est relié avec le dispositif (1) par l'intermédiaire d'une conduite flexible (3), la conduite flexible (3) présentant un diamètre de 1/4 de pouce à 1 pouce (de 6.65 mm à 25.4 mm) .

11. Dispositif (1) selon la revendication 9 ou 10, **caractérisé en ce que** le compresseur à vis (4a) est conçu pour générer un flux d'air comprimé de 0,5 m³/mn à 1,5 m³/mn, de préférence de 0,9 m³/mn à 1,2 m³/mn, à une pression de 6 bar à 8 bar.

12. Dispositif (1) selon l'une quelconque des revendications 9 à 11, **caractérisé en ce que** le compresseur à vis (4a) est équipé d'une fonction de démarrage progressif.

13. Dispositif (1) selon l'une quelconque des revendications 9 à 12, **caractérisé en ce que** le compresseur à vis (4a) est susceptible d'être relié avec plusieurs dispositifs (1), de préférence des dispositifs de soufflage directionnel à air comprimé (1a).
